# EUROPÄISCHE PATENTSCHRIFT

(11) **EP 0 609 521 B1**
(45) Veröffentlichungstag und Bekanntmachung des Hinweises auf die Patenterteilung: **27.11.1996**
(21) Anmeldenummer: 93119764.4
(22) Anmeldetag: 08.12.1993
(51) Int. Cl.: B64D 11/00

(54) **Anordnung zur Handhabung von Speisen und Getränken an Bord eines Flugzeuges**
Device to deliver food and beverage in a passenger aircraft
Dispositif pour la manutention des repas et boisson à bord d'une avion

(30) Priorität: 01.02.1993 DE 4302706
(43) Veröffentlichungstag der Anmeldung: 10.08.1994
(73) Patentinhaber: Daimler-Benz Aerospace Airbus Gesellschaft mit beschränkter Haftung, 21129 Hamburg (DE)
(72) Erfinder: Müller, Hans-Jürgen, D-24558 Henstedt-Ulzburg (DE)
(74) Vertreter: Hansmann, Dierk, Dipl.-Ing.

(56) Entgegenhaltungen:
- EP-A- 0 443 897
- AU-B- 41 549
- DE-A- 3 245 986
- DE-A- 4 208 478
- DE-C- 4 029 628
- GB-A- 2 078 650
- US-A- 3 517 899

## Beschreibung

Die Erfindung bezieht sich auf eine Anordnung zur Handhabung von Speisen und Getränken an Bord eines Flugzeuges, wodurch die Speisen und Getränke gelagert und transportiert werden, und in einheitlichen Menüschachteln verpackt sind.

Bekannte Anordnungen zur Handhabung von speisen und Getränken an Bord von Flugzeugen bestehen im wesentlichen aus Verpflegungswagen (Trolleys), die jeweils vor dem Start des Flugzeuges mit in einheitlichen Menüschachteln verpackten Speisen und Getränken aufgefüllt werden, wobei im Bordküchenbereich Stellplätze für die Trolleys vorgesehen sind. Der Transport der Menüschachteln mit den Speisen zu den einzelnen Passagieren geschieht dann mittels der Trolleys. Die Anzahl der von einem Flugzeug aufnehmbaren Menüschachteln ist hierbei von den Stellmöglichkeiten im jeweiligen Küchenbereich abhängig. Daher müssen bei einem Flugzeug, das beispielsweise mehrere Hundert Passagiere transportieren kann, zusätzliche Stellplätze für die Trolleys geschaffen werden, was dann zur Folge hat, daß die Anzahl der Passagiersitze reduziert werden muß. Hierbei sind die betreffenden Menüschachteln nicht wiederverwendbar und belasten somit die Müll-Handhabung. Es sind auch Lösungen bekannt, wobei die an Bord zu nehmenden Verpflegungsmengen im Unterflurbereich des Flugzeuges gelagert werden. So zeigt beispielsweise die DE-PS 32 45 986 eine entsprechende Verpflegungseinrichtung für Flugzeuge, bestehend aus mindestens einem Anrichteschrank auf einem Passagierdeck, aus einer Vielzahl von Vorratswagen in einem darunter befindlichen Unterdeck und aus mindestens einer zwischen dem Anrichteschrank und dem Unterdeck angeordneten Hubvorrichtung für die Vorratswagen, wobei die Vorratswagen im Unterdeck auf einer Plattform unterhalb des Anrichteschrankes bereitgestellt oder mittels einer Fördereinrichtung unterhalb des Anrichteschrankes verfahrbar sind und daß die Vorratswagen mittels der Hubvorrichtung nach Wahl von der Plattform anhebbar sind.

Hierbei müssen die Trolleys einzeln an Bord gebracht und auf den betreffenden Stellflächen der Plattform abgestellt werden. Bei Bedarf werden die einzelnen Trolleys mittels eines Aufzuges nach oben in den betreffenden Küchenbereich der Kabine gefördert, wo sie dann zur Verpflegung der Passagiere bereitstehen. Von hier werden sie gegebenenfalls durch die Kabinengänge zu den einzelnen Sitzreihen gefahren. Nachteilig ist hierbei, daß das Ein- und Ausladen der Trolleys recht zeitaufwendig ist und die Anordnung mit der Plattform und der Hubvorrichtung, bezogen auf die Menge der damit handhabbaren Speisen und Getränke, einen beachtlichen Raumbedarf hat.

Demgemäß liegt der Erfindung die Aufgabe zugrunde, eine gattungsgemäße Anordnung derart auszubilden, daß die Anzahl der Passagiersitze gesteigert, die Anzahl der an Bord des Flugzeuges verfügbaren Menüschachteln erhöht, die Zeit zum Ein- und Ausladen der Menüschachteln verkürzt und das Müllaufkommen reduziert wird.

Diese Aufgabe wird bei einer Anordnung zur Handhabung von Speisen und Getränken an Bord eines Flugzeuges der eingangs genannten Art dadurch gelöst, daß diese im wesentlichen aus einem zentral angeordneten Behälter von der äußeren Form eines Frachtcontainers für die Menüschachteln, mindestens einer Verteilerstation und einem zwischen dem Behälter und der Verteilerstation verlegten Transportkanal für die einzelnen Menüschachteln besteht, wobei der Transportkanal mindestens einen Vertikalförderer umfaßt.

Dabei ist insbesondere von Vorteil, daß die verfügbare Anzahl von Menüschachteln ohne Einbuße an Passagiersitzen erhöht wird.

Vorteilhafte Weiterbildungen der Erfindung sind in den Unteransprüchen angegeben.

Die Erfindung ist anhand der Zeichnung dargestellt und nachfolgend näher erläutert. Es zeigen
- Fig. 1: eine Anordnung zur Handhabung von Speisen und Getränken,
- Fig. 2: eine Übersicht über die gesamte Anordnung,
- Fig. 3: eine Anordnung mit alternativ verlegtem Kanal,
- Fig. 4: einen Querschnitt durch den Transportkanal,
- Fig. 5: die Teilansicht V nach Fig. 4,
- Fig. 6: einen Winkelbaustein des Transportkanals,
- Fig. 7: Einzelheiten des Winkelbausteins nach Fig. 5,
- Fig. 8: einen Vertikalförderer,
- Fig. 9: Formate von Menüschachteln,
- Fig. 10: ein Eingabeelement,
- Fig. 11: eine Anrichte,
- Fig. 12: eine Einschub-Einheit,
- Fig. 13: einen Beschickungs-Baustein,
- Fig. 14: einen Rumpfquerschnitt mit einer Anordnung zum Handhaben von Speisen und Getränken,
- Fig. 15: eine Verbindungsplatte,
- Fig. 16: eine Menüschachtel und
- Fig. 17: einen Rumpfquerschnitt eines Flugzeuges mit Mehrdeckanordnung.

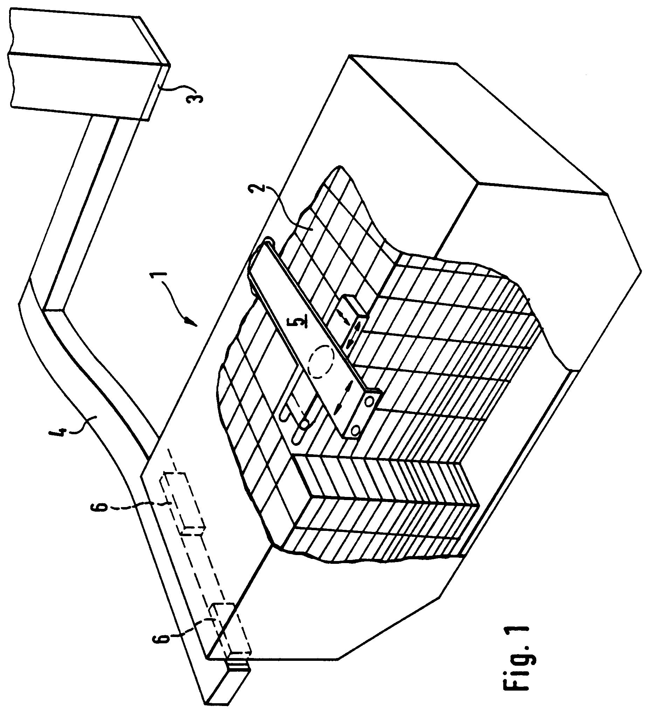

Figur 1 zeigt eine Anordnung zur Handhabung von Speisen und Getränken an Bord eines Flugzeuges, im wesentlichen bestehend aus einem Behälter 1 zur Aufnahme von Menüschachteln 2 und einer Verteilerstation 3, die über einen Transportkanal 4 miteinander in Verbindung stehen. Der Behälter 1 hat äußerlich die Abmessungen eines üblichen Frachtcontainers und ist unterhalb des Kabinenbodens, beispielsweise im Frachtraum untergebracht. Im Gegensatz zu einem üblichen Frachtcontainer weist der Behälter 1 jedoch intern eine steuerbare Entladeeinrichtung 5 auf. Der Transportkanal 4 ist aus einzelnen Bausteinen aufgebaut und kann daher an die unterschiedlichen örtlichen Gegebenheiten verschiedener Flugzeugtypen angepaßt werden. Zur Eingabe der Menüschachteln 2 in den Transportkanal 4 sind seitens des Transportkanals 4 zwei Eingabebausteine 6 vorgesehen.

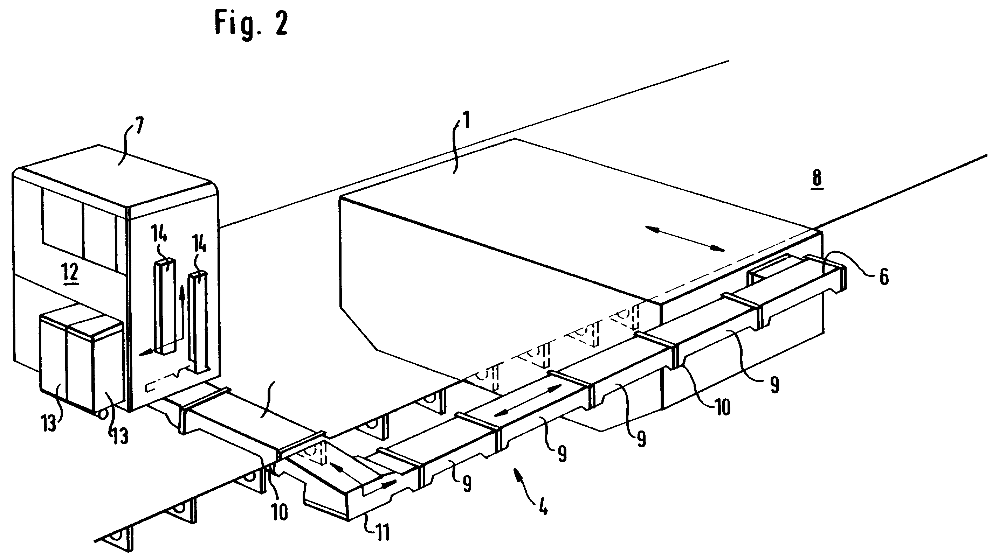

Figur 2 zeigt eine Übersicht über die gesamte Anordnung mit dem Behälter 1, dem Transportkanal 4 und einer Anrichte 7, die hier die Funktion einer Verteilerstation übernimmt. Der Behälter 1 befindet sich unterhalb des Kabinenbodens 8 und ist über einen Eingabebaustein 6 mit dem Transportkanal 4 verbunden. Dieser besteht aus einzelnen Bausteinen 9, die mittels Flanschverbindungen 10 miteinander verbunden sind. Der Transportkanal 4 verläuft zunächst in Längsrichtung der Kabine und verläuft dann über einen Winkelbaustein 11 weiter in Querrichtung bis zur Anrichte 7, wo unterhalb der Arbeitsplatte 12 zwei Trolleys 13 auf definierten Stellplätzen zum Auffüllen mit Menüschachteln 2 abgestellt sind. Zum Auffüllen ist seitens der Anrichte 7 für jeden Stellplatz eine Einschub-Einheit 14 vorgesehen. Damit können die Menüschachteln 2 aus dem Behälter 1 entnommen und in die Trolleys 13 eingelagert werden und stehen somit zur Verpflegung der Passagiere bereit.

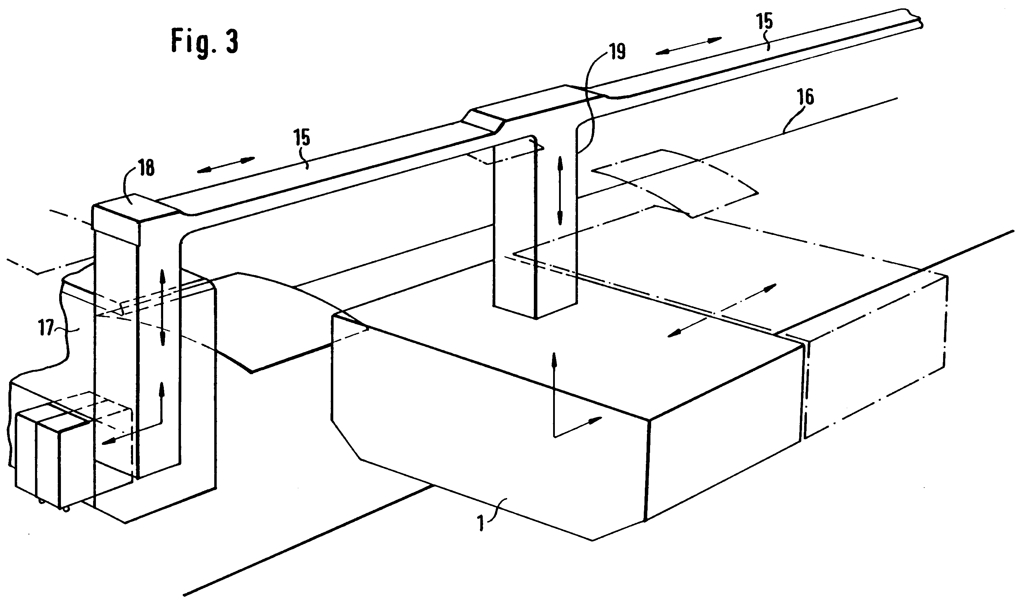

Fig. 3 zeigt eine Ausgestaltung der Anordnung mit einem Transportkanal 15, der oberhalb der Deckenkontur 16 angeordnet ist. Zur Verbindung mit dem Behälter 1 und der Anrichte sind Vertikalförderer 18 und 19 vorgesehen.

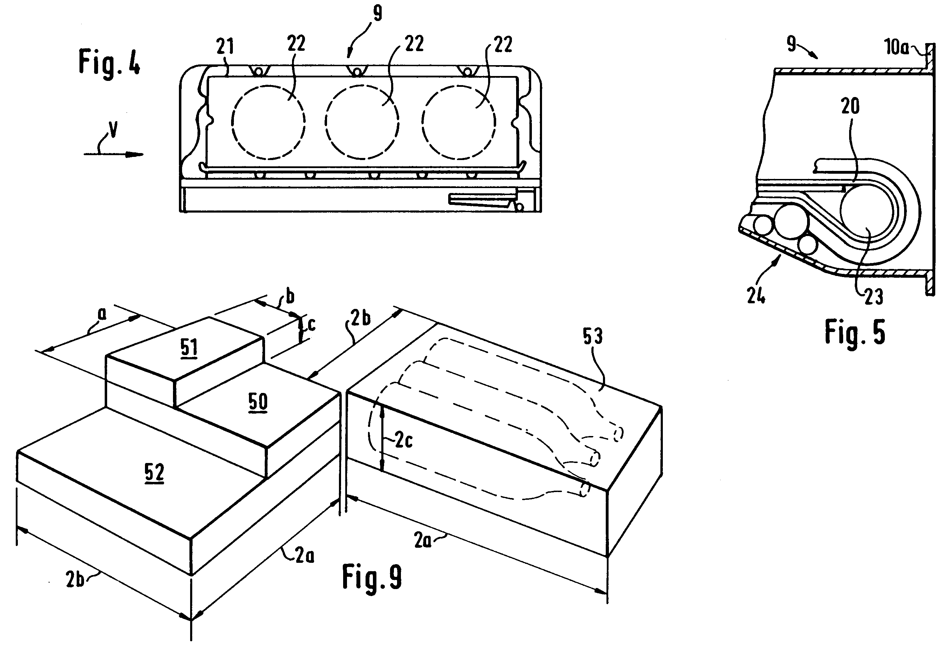

Fig. 4 zeigt einen Querschnitt durch einen Baustein 9 mit einem Laufband 20, auf dem gerade eine Getränkeschachtel 21 transportiert wird, worin sich drei liegende Getränkeflaschen 22 befinden.

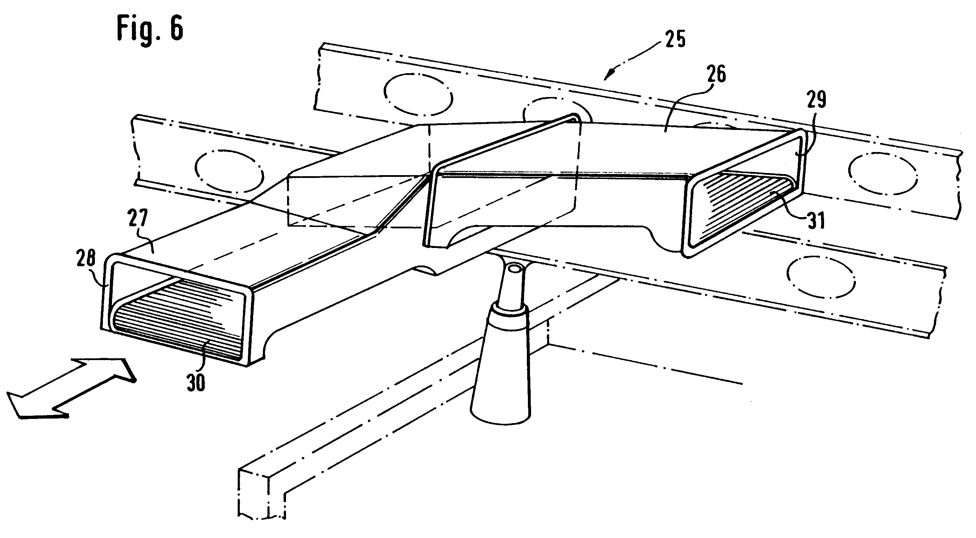

Fig. 5 zeigt in der Teilansicht V einen Endbereich des Bausteins 9 nach Fig. 4 mit dem Laufband 20, einem Flansch 10a und einer Walze 23. Nahe der Walze 23 befindet sich unterhalb des Laufbandes 20 eine Walzengruppe 24, wodurch der Abstand zwischen dem hin- und dem herlaufenden Teil des Laufbandes 20 reduziert wird. Hierdurch kann der zwischen den Endbereichen liegende Teil des Bausteins 9 im Querschnitt reduziert werden, wodurch der Platzbedarf des Transportkanals insgesamt verringert wird. Die Anordnung der Walze 23 und der Walzengruppe 24 ist in dem Endbereich, der dem in Fig. 5 dargestellten gegenüberliegt, entsprechend ausgebildet. Der Antrieb des Laufbandes 20 geschieht durch einen Elektromotor, der mindestens auf eine der Walzen 23 wirkt.

Fig. 6 zeigt einen Winkelbaustein 25 mit einem Querkanal 26 und einem Längskanal 27. An den offenen Anschlußstellen mit den Flanschen 28 und 29 sind Laufbänder 30 und 31 sichtbar.

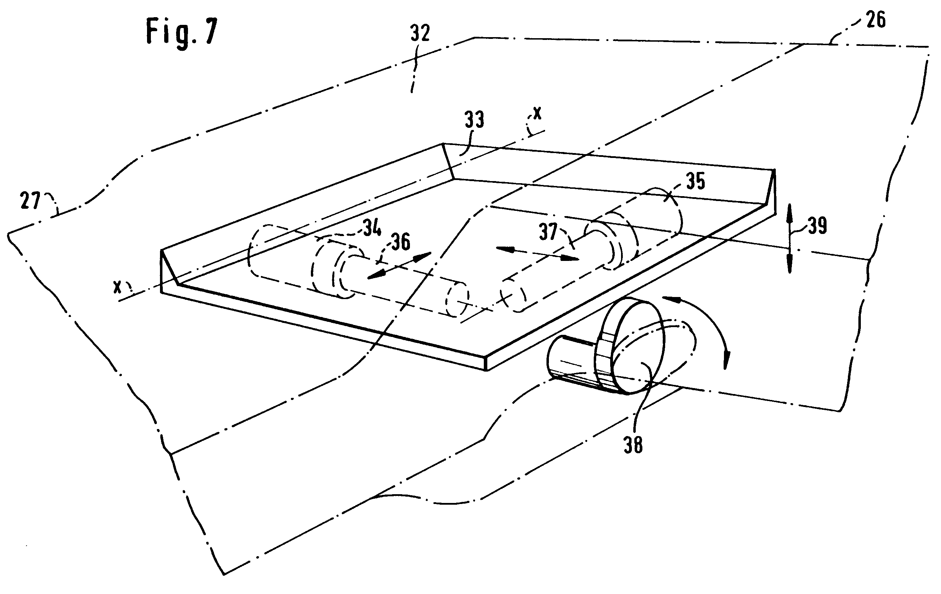

Fig. 7 zeigt Einzelheiten des Winkelbausteins nach Fig. 6 mit dem Querkanal 26 und dem Längskanal 27, die rechtwinklig in ein Gehäuse 32 einmünden. Innerhalb des Gehäuses 32 ist eine Schwenkplatte 33 um eine Achse x-x schwenkbar gelagert. Unterhalb der Schwenkplatte 33 sind zwei Fördermotore 34 und 35 mit Förderwalze 36 und 37 so angeordnet, daß sich die Achsen der Förderwalzen 36,37 senkrecht schneiden. Zum Anheben und absenken der Schwenkplatte 33 ist eine Hebe-Einheit 38 vorgesehen. Soll nun eine über den Längskanal 27 ankommende Menüschachtel 2 über den Winkelbaustein 25 in den Querkanal 26 transportiert werden, so wird die Schwenkplatte 33 mittels der Hebe-Einheit 38 abgesenkt und der Fördermotor 34 so lange eingeschaltet, bis die Menüschachtel 2 ihre Position auf der Schwenkplatte 33 voll eingenommen hat. Dann wird die Schwenkplatte 33 in Richtung des Pfeiles 39 angehoben bis sich die Unterkante der Menüschachtel 2 mit dem in Fig. 6 sichtbaren Laufband 31 in einer Höhe befindet. Dann wird der Fördermotor 35 eingeschaltet, so daß die Menüschachtel 2 das Gehäuse 32 in Richtung des Querkanals 26 verläßt.

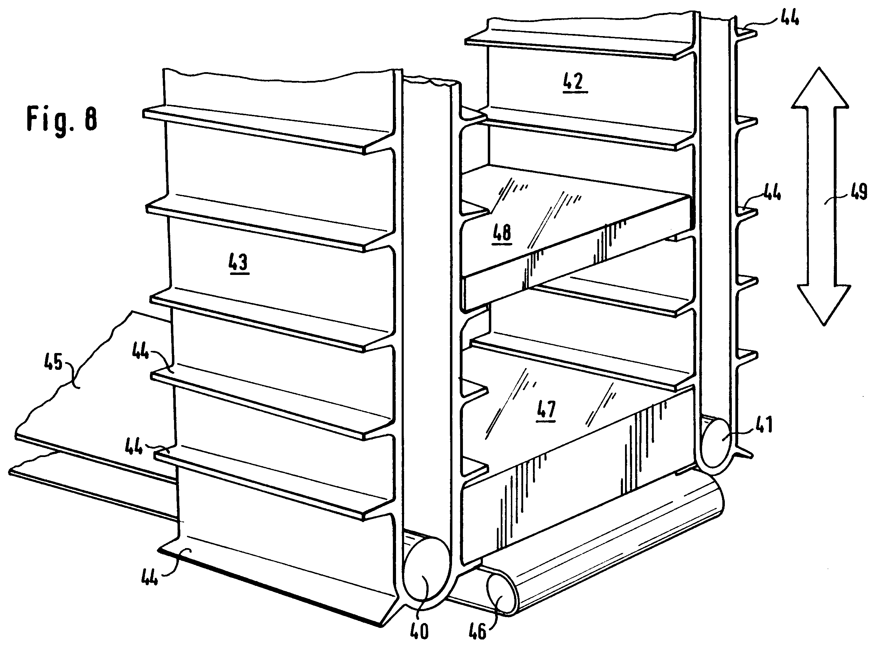

Fig. 8 zeigt den unteren Bereich des Vertikalförderers 18 mit den Förderwalzen 40 und 41 und den endlosen Vertikalbändern 42 und 43, die jeweils auf ihrer Außenseite quer zur Bandrichtung verlaufende Leisten 44 aufweisen. Entsprechend dem unteren Bereich sind auch im oberen Bereich des Vertikalförderers 18 zwei jedoch nicht sichtbare Förderwalzen angeordnet. Mittels eines in Richtung der Leisten 44 orientierten in den unteren Teil des Vertikalförderers 18 hineinragenden Laufbandes 45, das über eine Rolle 46 geführt ist, kann eine Menüschachtel 2 in den Vertikalförderer 18 eingefahren werden. Die Laufbänder 42,43 werden über die Förderwalzen 40,41 synchron in gegenläufigem Drehsinn angetrieben. Somit können Gegenstände wie eine Getränkeschachtel 47 oder eine Menüschachtel 48 vertikal in Richtung des Pfeiles 49 befördert werden.

Fig. 9 zeigt unterschiedliche Größen 50,51,52 von Menüschachteln sowie einer Getränkeschachtel 53. Diese kann mit maximal drei normalen Sekt- oder Weinflaschen oder 14 Getränkedosen zu je 0,33 l gefüllt sein. Aus den Abmessungen erkennt man, daß immer zwei kleine Schachteln dem Format der nächst größeren entsprechen.

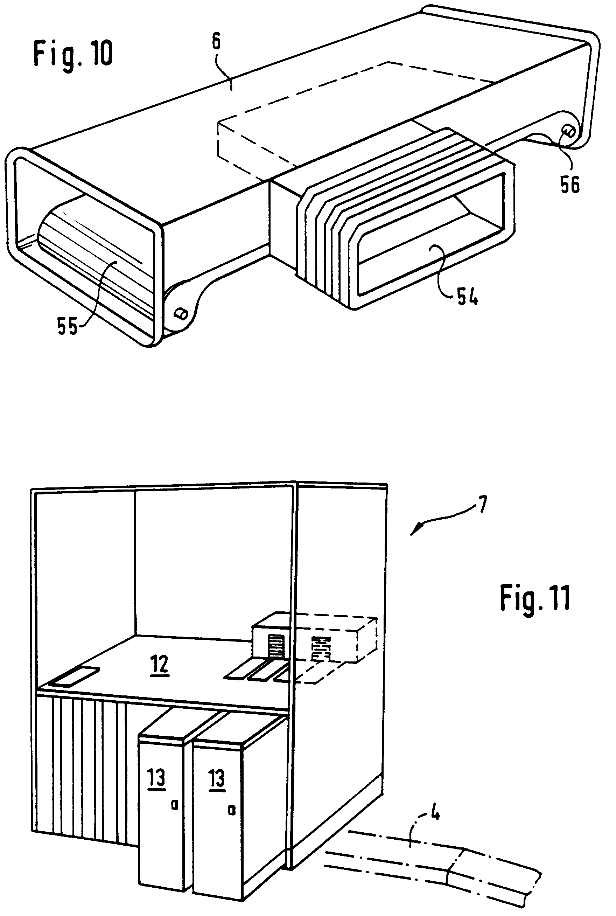

Fig. 10 zeigt den Eingabebaustein 6 mit dem anpaßbaren Durchgang 54, der eine Menüschachtel aufnehmen und auf das Laufband 55 schiebt, das durch den Antrieb 56 vorwärts oder rückwärts bewegt wird.

Fig. 11 zeigt die Anrichte 7 mit der Arbeitsplatte 12 und den Trolleys 13. Da die Aufnahme von Verpflegung jetzt nicht mehr durch Austausch der Trolleys geschieht, ist es nicht mehr erforderlich, die Anrichte in der Nähe großer Rumpftüren anzuordnen. Damit kann die Anordnung der Anrichte 7 besser den jeweiligen Gegebenheiten angepaßt werden. Eine Verlegung des Transportkanals 4 ist praktisch an jeden Ort der Kabine möglich.

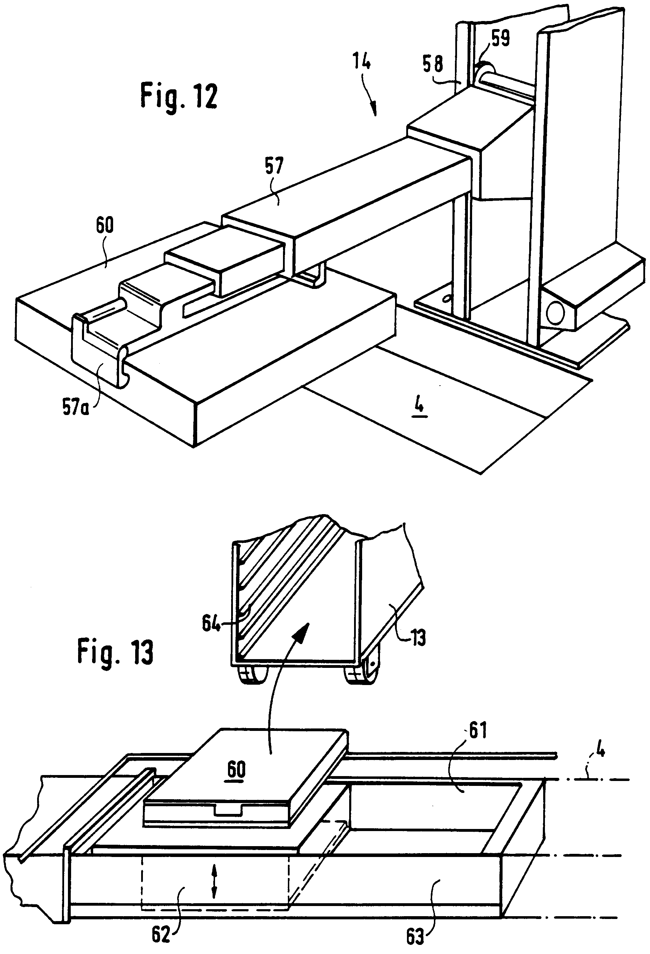

Fig. 12 zeigt eine Einschub-Einheit 14, mit einem Teleskoparm 57 mit einem Greifer 57a, einem Vertikalschacht 58 und einem Vertikalantrieb 59. Durch die Einschub-Einheit 14 werden Menüschachteln 60 aus einem Beschickungsbaustein des Transportkanals 4 entnommen und in bereitgestellte Trolleys eingeschoben. Dabei ist der Greifer 57a so ausgebildet, daß er keine obenliegende Menüschachtel berühren kann.

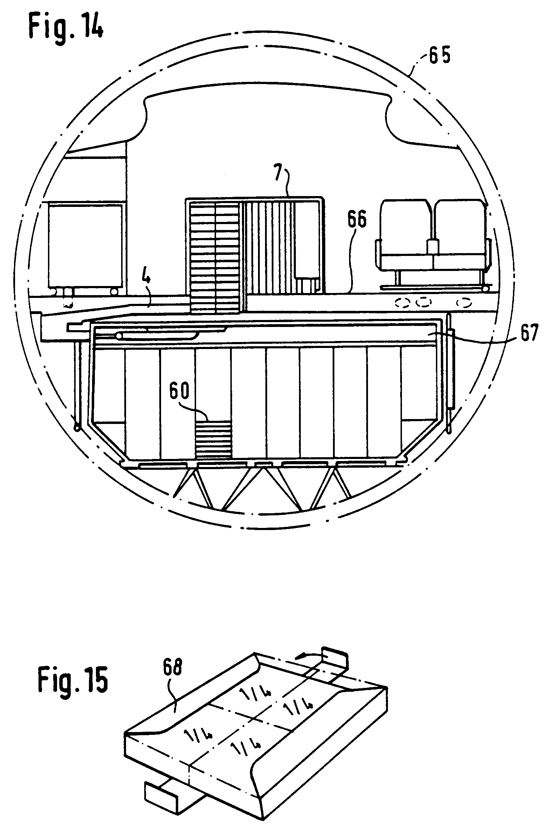

Fig. 13 zeigt einen Beschickungsbaustein 61, der Bestandteil des Transportkanals 4 ist. Innerhalb des Beschickungsbausteins 61, sind zwei Hebebühnen 62 und 63 angeordnet. In ihrer unteren Position nehmen die Hebebühnen 62,63 jeweils eine über den Transportkanal 4 ankommende Menüschachtel 60 auf und heben diese in vertikaler Richtung so weit an, daß sie vom jeweiligen Greifer 57a der Einschub-Einheit 14 erfaßt werden kann. Der Ausleger 57 der Einschub-Einheit 14 führt dann die einzelnen Menüschachteln 60 in das Tablettraster 64 des betreffenden Trolleys 13 ein.

Fig. 14 zeigt einen Querschnitt durch den Rumpf 65 eines Passagierflugzeuges. Oberhalb des Kabinenbodens 66 befindet sich die Anrichte 7, in der ein Trolley 13 abgestellt ist. Unterhalb des Kabinenbodens 66 befindet sich der Frachtraum 67 mit dem Behälter 1, in dem die Menüschachteln 60 verstaut sind. Die einzelnen Menüschachteln 60 gelangen über den Transportkanal 4 vom Behälter 1 zur Anrichte 7 und werden hier durch die Einschub-Einheit 14 in die Trolleys eingeschoben.

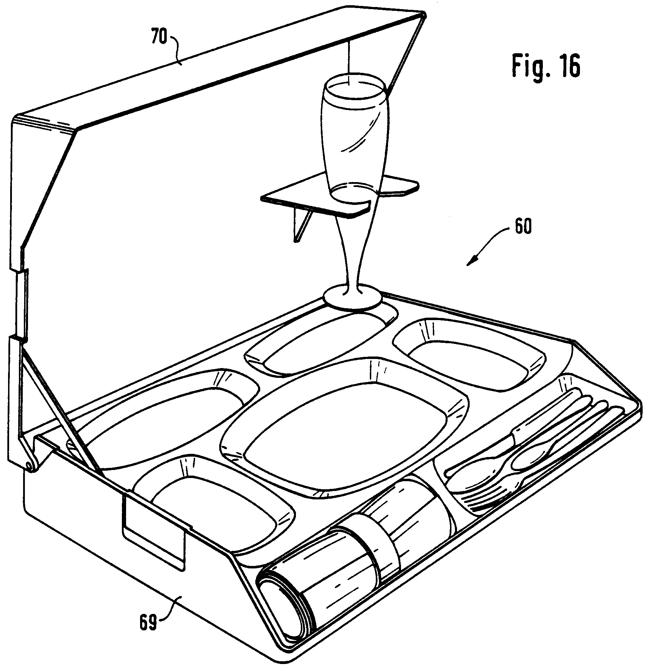

Fig. 15 zeigt eine Verbindungsplatte 68. Diese hat die Aufgabe, kleinere Menüschachteln jeweils zu einer durch den Transportkanal 4 transportfähigen größeren Menüschachtel 60 mit einheitlichen Abmessungen zusammenzufassen.

Fig. 16 zeigt eine Menüschachtel 60. Diese ist als vorzugsweise aus Kunststoff hergestellter wiederverwenbarer aus einem Unterteil 69 und einem Klappdeckel 70 bestehender Behälter ausgebildet und kann alle zur Bereitstellung einer Mahlzeit erforderlichen Waren aufnehmen. Die Menüschachtel 60 ist zur Erhöhung der Wärmedämmung doppelwandig ausgeführt, wobei die höchsten Dämmwerte im Bereich des Warmanteils erreicht werden. Zum Verschließen der Menüschachtel 60 ist eine leicht zu handhabende Klammer vorgesehen, die am Fluggastsitz leicht zu öffnen ist. Ferner ist die Menüschachtel 60 mit einer Sicherung versehen, wodurch diese innerhalb des Behälters 1 gegen mögliche Massenkräfte ortsfest gehalten werden. Diese Sicherung kann nur durch die Entladeeinrichtung gelöst, oder bei der Rückförderung der Menüschachteln 60 wieder in Kraft gesetzt werden.

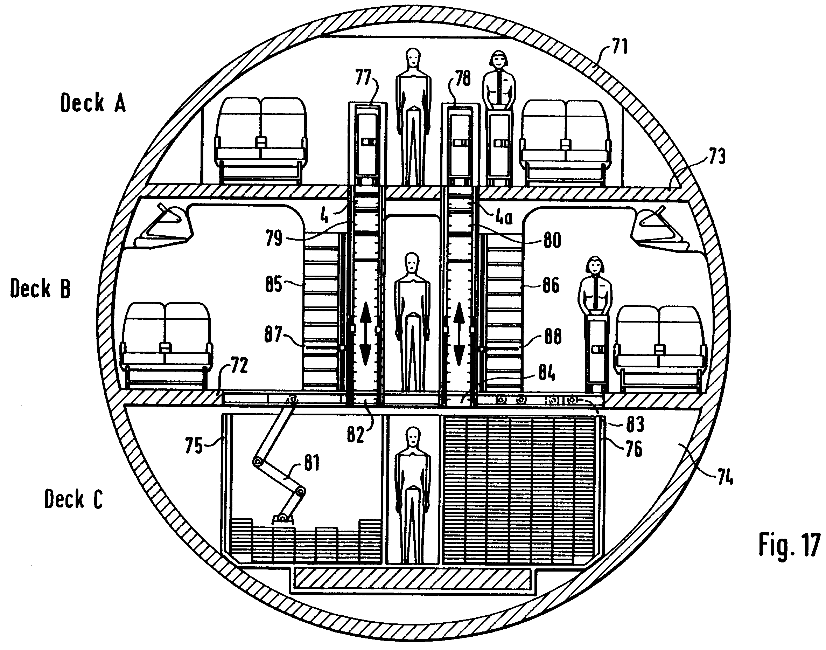

Fig. 17 zeigt einen Querschnitt durch einen Mehrdeck-Rumpf 71 mit einem ersten Kabinenboden 72 und einem zweiten Kabinenboden 73. Die oberen Decks A und B werden als Passagierkabinen genutzt. Das untere Deck C bildet den Frachtraum 74. Im Frachtraum 74 ist ein Behälter 75 abgestellt. Diese Ausgestaltung des Behälters weist ein aus zwei Hälften 76 und 76a bestehendes Rollo auf, wodurch die Oberseite dieses Behälters 75 verschließbar ist. Auf dem zweiten Kabinenboden 73 sind zwei Anrichten 77 und 78 angeordnet, wovon jede über einen Vertikalförderer 79 und 80 mit dem Behälter 75 in Verbindung steht. Unterhalb des Kabinenbodens 73 sind in Rumpflängsrichtung zwei Transportkanäle 4 und 4a verlegt, in die die Vertikalförderer 79,80 einmünden. Das Rollo 76,76a gibt gegebenenfalls beide Seiten des Behälters 75 zum Be- bzw. Entladen frei. Im Bild ist die linke Seite geöffnet. Eine innerhalb des Kabinenbodens 72 angeordnete Entladeeinrichtung 81 hat somit Zugriff auf die im Behälter 75 eingelagerten Menüschachteln 60. Zur Entnahme der Menüschachteln 60 aus dem Behälter 75 wird die Entladeeinrichtung 81 so angesteuert, daß sie die einzelnen Menüschachteln 60 aus dem Stapel entnimmt und in die hier mit 82 bezeichnete Eingabeeinrichtung zum Weitertransport durch den Vertikalförderer 79 eingibt. Zum Entladen der im Bild rechten Seite des Behälters 75 ist eine weitere Entladeeinrichtung 83 angeordnet, die mit einer Eingabeeinrichtung 84 zusammenwirkt und nötigenfalls gleichzeitig mit der Entladeeinrichtung 81 betrieben werden kann. Jeweils neben den Vertikalförderern 79 bzw. 80 befindet sich eine Batterie 85 bzw. 86 von Wärmzellen, die vorzugsweise als Mikrowellenöfen ausgebildet sind. Jede Wärmzelle weist eine Beschickungsklappe auf, die während des Betriebes aus Sicherheitsgründen geschlossen ist. Falls erforderlich, können die Wärmzellen jeweils eine Menüschachtel 60 aufnehmen, um den warm zu servierenden Inhalt innerhalb von etwa 2,5 Minuten auf Verbrauchstemperatur zu bringen. In Blickrichtung hinter den Vertikalförderern 79,80 ist je ein Trolley abgestellt, der vom Vertikalförderer 79,80 her bzw. von den Wärmzellen her mit Menüschachteln 60 aufgefüllt werden kann. Um die Menüschachteln 60 in die besagten Trolleys einzufüllen, ist je eine Einschubeinheit vorgesehen, die im Prinzip ausgebildet ist, wie die in Fig. 12 dargestellte. Zwei weitere Einschubeinheiten sind vorgesehen, um die Menüschachteln 60 aus den Vertikalförderern 79,80 in die Wärmzellen 85,86 einzuschieben und wieder aus diesen zu entnehmen und in den betreffenden Vertikalförderer zurückzuschieben. Eine andere Ausgestaltung der Wärmzellen besteht darin, daß diese jeweils eine Eingabeklappe und auf der gegenüberliegenden Seite eine Entnahmeklappe aufweisen. Hierdurch kann der Beschickungsvorgang gegebenenfalls beschleunigt werden. Anhand der vorbeschriebenen Ausbildung der Anordnung sind nun folgende Funktionsabläufe möglich.

Servieren kalter Speisen und Getränke:
Sollen die Passagiere des Flugzeuges beispielsweise mit kalten Speisen und Getränken versorgt werden, so entnehmen die Entladeeinrichtungen 81,82 die betreffenden Menüschachteln 60 aus dem Behälter 75 und geben diese über die Eingabeeinrichtungen 82,84 in den jeweiligen Vertikalförderer 79,80 ein. Befindet sich der Empfänger einer bestimmten Menüschachtel 60 beispielsweise auf dem Deck B, so wird diese Menüschachtel 60 etwa über den Vertikalförderer 80 bis in den Transportkanal 4a befördert und gelangt dann über diesen in Rumpflängsrichtung bis zu der Anrichte, die dem Sitzplatz des Passagiers am nächsten liegt. Hier gelangt sie über einen entsprechenden Vertikalförderer anhand einer entsprechenden Einschubeinheit in einen hier bereitgestellten Trolley und kann nun von einem Flugbegleiter zu dem Passagier gefahren werden. Die Kühlung der Speisen und Getränke ergibt sich dadurch, daß der Behälter 75 während des Fluges auf eine vorbestimmte Temperatur abgekühlt wird. Hierzu weist der Behälter 75 Anschlüsse auf, so daß dieser von entsprechend klimatisierter Luft durchströmt werden kann.

Servieren warmer Speisen und Getränke:
Ein ähnlicher Funktionsablauf ergibt sich, wenn ein Passagier, der sich beispielsweise auf Deck A befindet, eine warme Speise bekommen soll. Mittels der Entladeeinrichtung 81 wird die betreffende Menüschachtel 60 erfaßt und über die Eingabeeinrichtung 82 in den Vertikalförderer 79 eingebracht.

Von hier gelangt die Schachtel in den Transportkanal 4, und wird von diesem in Rumpflängsrichtung zu der Anrichte befördert, die dem Sitzplatz des Passagiers am nächsten liegt. Hier wird die Menüschachtel 60 nicht in einen Trolley 13 sondern zunächst in eine entsprechende Wärmzelle für eine vorbestimmte Zeit eingeschoben. Nach Beendigung der Einwirkzeit wird die Schachtel aus der Wärmzelle entnommen und in einen bereitgestellten Trolley eingeschoben und kann nun anhand des Trolleys durch einen Flugbegleiter zu dem betreffenden Passagier gefahren werden. Natürlich enthält ein Trolley, wenn er eine Anrichte verläßt, nicht nur eine Menüschachtel sondern die maximal faßbare Anzahl. Sollen beispielsweise warme Speisen und kalte Getränke gereicht werden oder umgekehrt, so brauchen hierzu nur die entsprechenden Menü- bzw. Getränkeschachteln in die Trolleys gepackt zu werden.

Die Funktion der Anordnung wird elektronisch gesteuert und läuft in bestimmten Phasen des Betriebes weitgehend automatisch ab. Die hierzu erforderlichen elektronischen und digitaltechnischen Mittel sind realisierbar.

## Patentansprüche

1. Anordnung zur Handhabung von Speisen und Getränken an Bord eines Flugzeuges, wodurch die Speisen und Getränke gelagert und transportiert werden, und in einheitlichen Menüschachteln (60) verpackt sind,
dadurch **gekennzeichnet,** daß die Anordnung im wesentlichen aus einem zentral angeordneten Behälter (1) von der äußeren Form eines Frachtcontainers für die Menüschachteln (60), mindestens einer Verteilerstation (3,7) und einem zwischen dem Behälter und der Verteilerstation (3,7) verlegten Transportkanal (4) für die einzelnen Menüschachteln besteht, wobei der Transportkanal (4) mindestens einen Vertikalförderer (18) umfaßt.

2. Anordnung nach Anspruch 1,
dadurch **gekennzeichnet,** daß der Behälter (1) eine steuerbare Entladeeinrichtung (5,81,83) aufweist.

3. Anordnung nach Anspruch 1 oder 2,
dadurch **gekennzeichnet,** daß der Behälter (1) mit mindestens einem Eingabebaustein (6) des Transportkanals (4) in Verbindung steht.

4. Anordnung nach einem der Ansprüche 1 bis 3,
dadurch **gekennzeichnet,** daß der Behälter (1) ein Rollo (76) aufweist, wodurch seine Oberseite verschließbar ist.

5. Anordnung nach einem der Ansprüche 3 oder 4,
dadurch **gekennzeichnet,** daß der Eingabebaustein (6) ein durch einen Antrieb (56) antreibbares Laufband (55) aufweist.

6. Anordnung nach einem der Ansprüche 1 bis 5,
dadurch **gekennzeichnet,** daß der Transportkanal (4) aus einzelnen Bausteinen (9) mit einem über Walzen (23) geführten Laufband (20) aufgebaut ist, die jeweils durch Flanschverbindungen (10) miteinander verbunden sind.

7. Anordnung nach Anspruch 6,
dadurch **gekennzeichnet,** daß jeder Baustein (9) zum Antrieb des Laufbandes (20) mindestens einen Elektromotor aufweist, der mindestens mit einer der Walzen (23) in Wirkverbindung steht.

8. Anordnung nach einem der Ansprüche 1 bis 7,
dadurch **gekennzeichnet,** daß der Transportkanal (4) Winkelbausteine (25) umfaßt, wobei ein Querkanal (26) und ein Längskanal (27) annähernd rechtwinklig in ein Gehäuse (32) einmünden und innerhalb des Gehäuses (32) eine schwenkplatte (33) mit antreibbaren Förderwalzen (36,37) angeordnet ist, deren Achsen annähernd senkrecht aufeinander stehen.

9. Anordnung nach einem der Ansprüche 1 bis 8,
dadurch **gekennzeichnet,** daß der Vertikalförderer (18) zwei gegenläufig antreibbare Vertikalbänder (42,43) mit auf ihren Außenseiten quer zur Bandrichtung verlaufenden Leisten (44) aufweist.

10. Anordnung nach einem der Ansprüche 3 bis 9,
dadurch **gekennzeichnet**, daß der Eingabebaustein (6) ein antreibbares Laufband (55) und einen anpaßbaren Durchgang (54) aufweist.

11. Anordnung nach einem der Ansprüche 1 bis 10,
dadurch **gekennzeichnet,** daß die Anordnung eine Einschub-Einheit (14) mit einem Teleskoparm (57) mit einem Greifer (57a) umfaßt, die innerhalb einer Anrichte (7) angeordnet ist, wobei der Teleskoparm (57) in einem Vertikalschacht (58) mittels eines Vertikalantriebes (59) verfahrbar ausgebildet ist.

12. Anordnung nach einem der Ansprüche 1 bis 11,
dadurch **gekennzeichnet,** daß der Transportkanal (4) mindestens einen Beschickungsbaustein (61) umfaßt, der zwei vertikal verfahrbare Hebebühnen (62 und 63) aufweist.

13. Anordnung nach einem der Ansprüche 1 bis 12,
dadurch **gekennzeichnet,** daß die Anordnung eine Verbindungsplatte (68) umfaßt.

14. Anordnung nach einem der Ansprüche 1 bis 13,
dadurch **gekennzeichnet,** daß die Anordnung eine vorzugsweise aus Kunststoff bestehende Menüschachtel (2,60) umfaßt.

15. Anordnung nach einem der Ansprüche 1 bis 14,
dadurch **gekennzeichnet,** daß die Anordnung mindestens eine Batterie (85,86) von Wärmzellen umfaßt.

16. Anordnung nach Anspruch 15,
dadurch **gekennzeichnet,** daß die Wärmzellen als Mikrowellenöfen ausgebildet sind.

17. Anordnung nach einem der Ansprüche 15 oder 16,
dadurch **gekennzeichnet,** daß jede Wärmzelle eine Beschickungsklappe aufweist.

18. Anordnung nach einem der Ansprüche 15 bis 17,
dadurch **gekennzeichnet,** daß jede Wärmzelle eine Eingabeklappe und eine Ausgabeklappe aufweist.

## Claims

1. Arrangement for handling meals and beverages on board an aircraft, by means of which the meals and beverages are stored and transported and are packed in uniform menu boxes (60),
characterized in that the arrangement substantially comprises a centrally disposed receptacle (1) for the menu boxes (60) which has the external shape of a freight container, at least one distribution station (3, 7) and a conveying channel (4) for the individual menu boxes which runs between the receptacle and the distribution station (3, 7), the conveying channel (4) comprising at least one vertical conveyor (18).

2. Arrangement according to claim 1,
characterized in that the receptacle (1) comprises a controllable unloading device (5, 81, 83).

3. Arrangement according to claim 1 or 2,
characterized in that the receptacle (1) is connected to at least one input module (6) of the conveying channel (4).

4. Arrangement according to one of claims 1 to 3,
characterized in that the receptacle (1) comprises a roller blind (76), by means of which its top side is closable.

5. Arrangement according to one of claims 3 or 4,
characterized in that the input module (6) comprises a conveyor belt (55) drivable by means of a drive (56).

6. Arrangement according to one of claims 1 to 5,
characterized in that the conveying channel (4) comprises individual modules (9), which have a conveyor belt (20) guided over rollers (23) and are connected to one another in each case by flange joints (10).

7. Arrangement according to claim 6,
characterized in that each module (9), for driving the conveyor belt (20), comprises at least one electric motor which is operationally connected at least to one of the rollers (23).

8. Arrangement according to one of claims 1 to 7,
characterized in that the conveying channel (4) comprises angular modules (25), a transverse channel (26) and a longitudinal channel (27) opening approximately at right angles into a housing (32) and there being disposed inside the housing (32) a hinged plate (33) having drivable transport rollers (36, 37), the axes of which lie approximately at right angles to one another.

9. Arrangement according to one of claims 1 to 8,
characterized in that the vertical conveyor (18) comprises two vertical belts (42, 43) drivable in opposite directions and having, at their outside, ledges (44) which extend at right angles to the belt direction.

10. Arrangement according to one of claims 3 to 9,
characterized in that the input module (6) comprises a drivable conveyor belt (55) and an adaptable opening (54).

11. Arrangement according to one of claims 1 to 10,
characterized in that the arrangement comprises a withdrawable unit (14), which has a telescopic arm (57) with a gripper (57a) and is disposed inside a pantry (7), the telescopic arm (57) being designed to be displaceable in a vertical shaft (58) by means of a vertical drive (59).

12. Arrangement according to one of claims 1 to 11,
characterized in that the conveying channel (4) comprises at least one charging module (61), which has two vertically displaceable lifting platforms (62 and 63).

13. Arrangement according to one of claims 1 to 12,
characterized in that the arrangement comprises a connecting plate (68).

14. Arrangement according to one of claims 1 to 13,
characterized in that the arrangement comprises a menu box (2, 60) which is preferably made of plastic material.

15. Arrangement according to one of claims 1 to 14,
characterized in that the arrangement comprises at least one group (85, 86) of heating cells.

16. Arrangement according to claim 15,
characterized in that the heating cells take the form of microwave ovens.

17. Arrangement according to one of claims 15 or 16,
characterized in that each heating cell has a charging flap.

18. Arrangement according to one of claims 15 to 17,
characterized in that each heating cell has an input flap and an output flap.

## Revendications

1. Dispositif destiné à manipuler des repas et des boissons à bord d'un avion, par l'intermédiaire duquel les repas et les boissons sont stockés et transportés, de même qu'ils sont emballés dans des boîtes à menus individuelles (60),
**caractérisé en ce que**, le dispositif se compose principalement d'un réservoir central (1) présentant la forme extérieure d'un conteneur d'usage courant pour les boîtes à menus (60), au moins une station de distribution (3, 7) et un canal de transport (4) pour les boîtes à menus individuelles disposé entre le réservoir et la station de distribution (3, 7), le canal de transport (4) comprenant au moins un transporteur vertical (18).

2. Dispositif selon la revendication 1, caractérisé en ce que le réservoir (1) présente un dispositif de déchargement (5, 81, 83) pouvant être commandé.

3. Dispositif selon la revendication 1 ou 2, caractérisé en ce que le réservoir (1) se trouve en connexion avec au moins un élément d'entrée (6) du canal de transport (4).

4. Dispositif selon l'une ou l'autre des revendications 1 à 3, caractérisé en ce que le réservoir (1) présente un store (76) par l'intermédiaire duquel sa face supérieure peut être fermée.

5. Dispositif selon l'une ou l'autre des revendications 3 ou 4, caractérisé en ce que l'élément d'entrée (6) présente une bande de roulement (55) pouvant être entraînée par un moteur (56).

6. Dispositif selon l'une ou l'autre des revendications 1 à 5, caractérisé en ce que le canal de transport (4) est formé d'éléments individuels (9) avec une bande de roulement (20) guidée par l'intermédiaire de rouleaux (23), qui sont reliés l'un à l'autre par des connexions à flasques (10).

7. Dispositif selon la revendication 6, caractérisé en ce que chaque élément (9) présente au moins un électromoteur destiné à entraîner la bande de roulement (20), qui se trouve en connexion active au moins avec un des rouleaux (23).

8. Dispositif selon l'une ou l'autre des revendications 1 à 7, caractérisé en ce que le canal de transport (4) comprend des éléments en angle (25), un canal transversal (26) et un canal longitudinal (27) débouchant plus ou moins à angle droit dans un boîtier (32) et une plaque pivotante (33) pourvue de rouleaux de transport pouvant être entraînés (36, 37) étant disposée à l'intérieur du boîtier (32), rouleaux dont les axes sont approximativement perpendiculaires l'un à l'autre.

9. Dispositif selon l'une ou l'autre des revendications 1 à 8, caractérisé en ce que le transporteur vertical (18) présente deux bandes verticales (42, 43) pouvant être entraînées dans un sens opposé pourvues sur leurs faces externes de listeaux (44) s'étendant transversalement à la direction de la bande.

10. Dispositif selon l'une ou l'autre des revendications 3 à 9, caractérisé en ce que l'élément d'entrée (6) présente une bande de roulement pouvant être entraînée (55) et un passage adaptable (54).

11. Dispositif selon l'une ou l'autre des revendications 1 à 10, caractérisé en ce que le dispositif comprend une unité d'insertion (14) pourvue d'un bras télescopique (57) doté d'une griffe (57a), qui est disposé à l'intérieur d'une cabine (7), le bras télescopique (57) étant conçu de manière à pouvoir être déplacé au moyen d'un entraînement vertical (59) dans une cheminée verticale (58).

12. Dispositif selon l'une ou l'autre des revendications 1 à 11, caractérisé en ce que le canal de transport (4) comprend au moins un élément de chargement (61) qui présente deux plateformes de levage (62 et 63) pouvant être déplacées verticalement.

13. Dispositif selon l'une ou l'autre des revendications 1 à 12, caractérisé en ce que le dispositif comprend une plaque de connexion (68).

14. Dispositif selon l'une ou l'autre des revendications 1 à 13, caractérisé en ce que le dispositif comprend une boîte à menu (2, 60) composée préférentiellement de plastique.

15. Dispositif selon l'une ou l'autre des revendications 1 à 14, caractérisé en ce que le dispositif comprend au moins une batterie (85, 86) de cellules de chauffage.

16. Dispositif selon la revendication 15, caractérisé en ce que les cellules de chauffage sont conçues commes des fours à micro-ondes.

17. Dispositif selon l'une ou l'autre des revendications 15 ou 16, caractérisé en ce que chaque cellule de chauffage présente un clapet de chargement.

18. Dispositif selon l'une ou l'autre des revendications 15 à 17, caractérisé en ce que chaque cellule de chauffage présente un clapet d'entrée et un clapet de sortie.
